(19) Europäisches Patentamt

European Patent Office

Office européen des brevets

(11) **EP 1 142 172 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(21) Anmeldenummer: **99963279.7**

(22) Anmeldetag: **02.12.1999**

(51) Int Cl.⁷: $H04B\ 17/00$, $H04L\ 27/26$

(86) Internationale Anmeldenummer:
**PCT/DE99/03865**

(87) Internationale Veröffentlichungsnummer:
**WO 00/036769 (22.06.2000 Gazette 2000/25)**

(54) **VERFAHREN UND KOMMUNIKATIONSANORDNUNG ZUR ÜBERMITTLUNG VON INFORMATIONEN MIT HILFE EINES MULTITRÄGERVERFAHRENS**

METHOD AND COMMUNICATIONS ASSEMBLY FOR TRANSFERRING INFORMATION BY USING A MULTI-CARRIER METHOD

PROCEDE ET SYSTEME DE COMMUNICATION POUR TRANSMETTRE DES DONNEES A L'AIDE D'UN PROCEDE A ONDES PORTEUSES MULTIPLES

(84) Benannte Vertragsstaaten:
**DE ES FR GB IT**

(30) Priorität: **15.12.1998 DE 19857821**

(43) Veröffentlichungstag der Anmeldung:
**10.10.2001 Patentblatt 2001/41**

(73) Patentinhaber: **SIEMENS AKTIENGESELLSCHAFT**
**80333 München (DE)**

(72) Erfinder: **ZIRWAS, Wolfgang**
**D-82194 Gröbenzell (DE)**

(56) Entgegenhaltungen:
**WO-A-97/01900**    **GB-A- 2 300 546**
**US-A- 5 673 290**

- **CZYLWIK A: "COMPARISON BETWEEN ADAPTIVE OFDM AND SINGLE CARRIER MODULATION WITHFREQUENCY DOMAIN EQUALIZATION" IEEE VEHICULAR TECHNOLOGY CONFERENCE,US,NEW YORK, IEEE, Bd. CONF. 47, 1997, Seiten 865-869, XP000736731 ISBN: 0-7803-3660-7**

**Beschreibung**

Bei drahtlosen, auf Funkkanälen basierenden Kommunikationsnetzen, insbesondere bei Punkt-zu-Multipunkt Funk-Zubringernetzen - auch als "Radio In The Local Loop" bzw. "RLL" bezeichnet - sind mehrere Netzabschlußeinheiten jeweils über einen oder mehrere Funkkanäle an eine Basisstation - auch als "Radio Base Station" bzw. "RBS" bezeichnet - angeschlossen. Im telcom report Nr. 18 (1995), Heft 1 "Drahtlos zum Freizeichen", Seite 36, 37 ist beispielsweise ein drahtloses Zubringernetz für die drahtlose Sprach- und Datenkommunikation beschrieben. Das beschriebene Kommunikationssystem stellt einen RLL-Teilnehmeranschluß in Kombination mit moderner Breitband-Infrastruktur - z.B. "Fiber to the curb" - dar, welches in kurzer Zeit und ohne größeren Aufwand anstelle der Verlegung von drahtgebundenen Anschlußleitungen realisierbar ist. Die den einzelnen Teilnehmern zugeordneten Netzabschlußeinheiten RNT sind über das Übertragungsmedium "Funkkanal" und die Basisstation RBS an ein übergeordnetes Kommunikationsnetz, beispielsweise an das ISDN-orientierte Festnetz, angeschlossen.

Durch die zunehmende Verbreitung von Multimedia-Anwendungen müssen hochbitratige Datenströme schnell und sicher über Kommunikationsnetze, insbesondere über drahtlose Kommunikationsnetze bzw. über Mobilfunksysteme übertragen werden, wobei hohe Anforderungen an die Funkübertragungssysteme, welche auf einem störanfälligen und hinsichtlich der Übertragungsqualität schwer einzuschätzenden Übertragungsmedium "Funkkanal" basieren, gestellt werden. Ein Übertragungsverfahren zur Übertragung von breitbandigen Datenströmen - z.B. von Videodatenströmen - stellt beispielsweise das auf einem sogenannten Multiträgerverfahren basierende OFDM-Übertragungsverfahren - auch als Orthogonal Frequency Division Multiplexing OFDM bezeichnet - dar. Bei der OFDM-Übertragungstechnik werden die zu übermittelnden Informationen bzw. wird der zu übermittelnde Datenstrom innerhalb des Funkkanals auf mehrere Subkanäle bzw. Subträger aufgeteilt bzw. parallelisiert, wobei die zu übermittelnden Informationen jeweils mit einer relativ geringen Datenrate, jedoch in additiv überlagerter Form parallel übertragen werden. Die OFDM-Übertragungstechnik wird beispielsweise beim Digitalen Terrestrischen Rundfunk - auch als Digital Audio Broadcasting DAB bezeichnet - und für das Digitale Terrestrische Fernsehen - auch als Digital Terrestrial Video Broadcasting DTVB bezeichnet - eingesetzt.

In der Druckschrift "Mitteilungen der TU-Braunschweig, Mobilfunktechnik für Multimedia-Anwendungen", Professor H. Rohling, Jahrgang XXXI, Heft 1-1996 ist in Abbildung 6, Seite 46 das OFDM-Übertragungsverfahren näher beschrieben. Hierbei wird ausgehend von einem seriellen Datenstrom im Sender für die Modulation der beispielsweise n Subträger eine Seriell/Parallelwandlung durchgeführt, wobei für den zeitlich i-ten OFDM-Block mit der Blocklänge T' und dem j-ten Subträger jeweils ein binäres Codewort mit der Wortbreite k - die Wortbreite k ist vom eingesetzten Modulationsverfahren abhängig - gebildet wird. Aus den gebildeten Codewörtern werden mit Hilfe eines senderspezifischen Modulationsverfahrens die entsprechenden komplexen Modulationssymbole - im folgenden auch als Sendesymbole bezeichnet - gebildet, wobei zu jedem Zeitpunkt i jedem der k Subträger ein Sendesymbol zugeordnet ist. Der Abstand der einzelnen Subträger ist durch $\Delta f = 1-T'$ festgelegt, wodurch die Orthogonalität der einzelnen Subträgersignale im Nutzintervall [0,T'] garantiert wird. Durch Multiplikation der Schwingungen der einzelnen Subträger mit den entsprechenden Modulationssymbolen bzw. Sendesymbolen und der anschließenden Addition der gebildeten Modulationsprodukte wird das entsprechende zeitdiskrete Sendesignal für den zeitlich i-ten OFDM-Block erzeugt. Dieses Sendesignal wird in abgetasteter, d.h. zeitdiskreter Form durch eine Inverse, Diskrete Fourier-Transformation-IDFT - direkt aus den Modulationssymbolen bzw. Sendesymbolen der einzelnen betrachteten Subträger berechnet. Zur Minimierung von Intersymbol-Interferenzen wird jedem OFDM-Block im Zeitbereich ein Guard-Intervall $T_G$ vorangestellt, was einer Verlängerung des zeitdiskreten OFDM-Signals im Intervall [$-T_G$, 0] bewirkt - vergleiche "Mitteilungen der TU-Braunschweig, Mobilfunktechnik für Multimedia-Anwendungen", Abbildung 7. Das eingefügte Guard-Intervall $T_G$ entspricht vorteilhaft der maximal auftretenden Laufzeitdifferenz zwischen den einzelnen bei der Funkübertragung entstehenden Ausbreitungspfaden. Durch das empfängerseitige Entfernen des hinzugefügten Guard-Intervalls $T_G$ wird beispielsweise eine Störung des i-ten OFDM-Blocks durch das zeitlich benachbarte OFDM-Signal zum Zeitpunkt i-1 vermieden, so daß im Intervall [0,T'] das Sendesignal über sämtliche Umwegpfade empfangen wird und die Orthogonalität zwischen den Subträgern im vollen Maße im Empfänger erhalten bleibt. Bei einer großen Anzahl von Subträgern - beispielsweise n = 256 Subträger - und entsprechend langen Symboldauern T = T' + $T_G$ ist die Dauer $T_G$ klein gegenüber T, so daß die Einfügung des Guard-Intervalls die Bandbreite effizient nicht wesentlich beeinträchtigt und ein nur geringer Overhead entsteht. Nach Abtastung des am Eingang des Empfängers empfangenen Sendesignals im Basisband - durch einen A/D-Wandler - und nach Extraktion des Nutzintervalls - d.h. nach Beseitigung des Guard-Intervalls $T_G$ - wird mit Hilfe einer Diskreten Fourier-Transformation - DFT - das empfangene Sendesignal in den Frequenzbereich transformiert, d.h. es werden die empfangenen Modulationssymbole bzw. die empfangenen Empfangssymbole bestimmt. Aus den bestimmten Empfangssymbolen werden mittels eines geeigneten Demodulationsverfahrens die entsprechenden Empfangs-Codewörter erzeugt und aus diesen wird durch Parallel/Seriell-wandlung der empfangene, serielle Datenstrom gebildet. Durch die Vermeidung von Intersymbol-Interferenzen bei OFDM-Übertragungsverfahren wird der Rechenaufwand im jeweiligen Empfänger erheblich reduziert, wodurch die OFDM-Übertragungstechnik beispielsweise für die terrestrische Übertragung digitaler Fernsehsignale eingesetzt wird - beispielsweise zur. Übertragung von breitbandigen Datenströmen mit einer Übertragungsrate von 34 MBit/s pro Funkkanal. Für die Übermittlung des mit Hilfe des OFDM-Übertragungsverfahrens zu übermittelnden, seriellen Datenstromes werden absolute bzw. differentielle Modulationsverfahren sowie entsprechende kohärente bzw. inkohärente Demodulationsverfahren eingesetzt. Obwohl bei der Übermittlung des gebildeten Sendesignals über das Übertragungsmedium "Funkkanal" die Orthogonalität der Subträger durch den Einsatz des OFDM-Übertragungsverfahrens im vollen Umfang erhalten bleibt, werden durch die Übertragungseigenschaften des Funkkanals die übertragenen, frequenzdiskreten, bzw. frequenzselektiven Sendesymbole sowohl in der Phase als auch in der Amplitude verändert. Der Amplituden- und Phaseneinfluß des Funkkanals erfolgt subträgerspezifisch auf den einzelnen jeweils sehr schmalbandigen Subträgern; zudem überlagern Rauschsignale additiv das übertragene Nutzsignal. Bei Einsatz von kohärenten Demodulationsverfahren ist eine Kanalschätzung erforderlich, die je nach Qualitätsanforderungen auf einen erheblichen technischen und wirtschaftlichen Realisierungsaufwand beruhen und zudem die Leistungsfähigkeit des Übertragungssystems vermindern. Vorteilhaft werden differentielle Modulationsverfahren sowie entsprechende inkohärente Demodulationsverfahren eingesetzt, bei denen auf eine aufwendige Funkkanalschätzung verzichtet werden kann. Bei differentiellen Modulationsverfahren werden die zu übermittelnden Informationen nicht durch Auswahl der Modulationssymbole bzw. der frequenzdiskreten Sendesymbole direkt übertragen, sondern durch Änderung der zeitlich benachbarten, frequenzdiskreten Sendesymbole auf dem selben Subträger. Beispiele für differentielle Modulationsverfahren sind die 64-stufige 64-DPSK - Differential Phase Shift Keying - sowie die 64-DAPSK - Differential Amplitude and Phase Shift Keying. Bei der 64-DAPSK werden sowohl die Amplitude als auch gleichzeitig die Phase differentiell moduliert.

Bei großen Laufzeitunterschieden zwischen den einzelnen Signalpfaden, d.h. bei starker Mehrwegeausbreitung, können unterschiedliche, übertragungskanalbedingte Dämpfungen zwischen den einzelnen empfangenen Subträgern Dämpfungsunterschieden bis zu 20 dB und mehr auftreten. Die empfangenen, hohe Dämpfungswerte aufweisenden Subträger, bzw. die Subträger mit kleinen S/N-Werten - auch als Signalleistung-zu-Rauschleistung-Verhältnis bezeichnet - weisen eine sehr große Symbolfehlerrate auf, wodurch die Gesamt-Bitfehlerrate über alle Subträger erheblich steigt. Es ist bereits bekannt, bei mit Hilfe von kohärenten Modulationsverfahren modulierten Subträgern, die durch die frequenzselektiven Übertragungseigenschaften des Übertragungsmediums - auch als Übertragungsfunktion H(f) bezeichnet - verursachten Dämpfungsverluste, empfangsseitig mit Hilfe der inversen Übertragungsfunktion - auch als 1/H(f) bezeichnet - zu korrigieren, wobei die frequenzselektiven Dämpfungsverluste beispielsweise durch Auswertung von übermittelten, jeweils bestimmten Subträgern zugeordneten Referenz-Pilottönen ermittelt werden. Durch dieses Verfahren zur empfangsseitigen Entzerrung des Übertragungskanals wird jedoch eine starke Rauschanhebung bei den Subträgern mit geringen S/N-Werten verursacht. Die durch die Rauschanhebung verursachte Bitfehlerrate bei Subträgern mit kleinen S/N-Werten kann auch durch die Einführung einer Kanalcodierung nicht verbessert werden, so daß die über alle Subträger hinweg mögliche Gesamt-Übertragungskanalkapazität des frequenzselektiven Übertragungsmediums trotz empfangsseitiger Entzerrung des Übertragungskanals nicht erreicht wird.

Bekannte Verfahren zur Verbesserung der Übertragungsqualität in Multiträgersystemen, wie sie beispielsweise aus dem Dokument "Comparison between adaptive OFDM and single carrier modulation with frequency domain equalization", A. Czylwik, IEEE Vehicular Technology Conference, USA, New York, Bd. Conf. 47, 1997, S. 865-869, XP000736731, ISBN: 0-77803-3660-7 bekannt sind, schätzen die Übertragungsfunktion des kanals anhand bereits übertragener Informationen. Dabei wird vorausgesetzt, dass sich die Eigenschaften des Funkkanals zeitlich nur langsam verändern. Die geschätzte Übertragungsfunktion wird von der empfangenden Station über Signalisierungskanäle dem Sender zurückübermittelt.

Bei einem Multiträgerverfahren gemäß der US 5 673 290 werden Übertragungsparameter einer Kommunikationsleitung gemessen. Anschließend wird das Modulationsverfahren jedes Trägers an die gemessenen Parameter angepasst.

Der Erfindung liegt die Aufgabe zugrunde, bei der Übermittlung von Informationen über ein frequenzselektive Übertragungseigenschaften aufweisendes Übertragungsmedium eine maximale Ausnutzung der zur Verfügung stehenden Übertragungsressourcen des Übertragungsmediums zu erreichen. Insbesondere soll bei Einsatz eines Multiträgerverfahrens eine maximale Ausnutzung der Übertragungsressourcen aller Mehrwegekomponenten bzw. Subträger erreicht werden. Die Aufgabe wird ausgehend von einem Verfahren und einer Kommunikationsanordnung gemäß den Merkmalen des Oberbegriffs der Patentansprüche 1 und 19 durch deren kennzeichnende Merkmale gelöst.

Beim erfindungsgemäßen Verfahren zum Übermitteln von Informationen über ein bestimmte Übertragungseigenschaften aufweisendes Übertragungsmedium mit Hilfe eines Multiträgerverfahrens werden die zu übermittelnden Informationen durch ein mehrere frequenzspezifische Subträger aufweisendes Sendesignal über das Übertragungsmedium an eine zweite Einheit übermittelt. Der wesentliche Aspekt des erfindungsgemäßen Verfahrens besteht darin, daß in der ersten Einheit frequenzselektive. Übertragungseigenschaften des Übertragungsmediums ermittelt werden, und anschließend die frequenzspezifischen. Subträger des Sendesignals an die ermittelten, frequenzselektiven Übertragungseigenschaften des Übertragungsmediums angepaßt werden.

Der wesentliche Vorteil des erfindungsgemäßen Verfahrens besteht darin, daß durch die sendeseitige Kanalentzerrung bzw. sendeseitige Anpassung der frequenzspezifischen Subträger des auszusendenden Sendesignals an die ermittelten frequenzselektiven Übertragungseigenschaften des Übertragungsmediums alle Subträger des über das Übertragungsntedium übermittelten Sendesignals bei Eingang an der zweiten Einheit die gleichen Empfangspegel bzw. Signal-Amplitudenwerte und somit die gleichen Signalleistung-zu-Rauschleistung-Verhältnisse S/N aufweisen. Folglich sind alle Subträger des Sendesignals sendeseitig mit der gleichen Modulations-Stufenzahl modulierbar, so daß eine maximale Ausnutzung der Übertragungsressourcen der einzelnen Subträger des Sendesignals und somit eine maximale Ausnutzung der Übertragungsressourcen des Übertragungsmediums erreicht wird. Durch die Modulation der Subträger des Sendesignals mit der gleichen Modulations-Stufenzahl wird der Aufwand für die Steuerung der Modulation bzw. Demodulation und insbesondere der Overhead bei der Übermittlung der Modulations- und Demodulations-Steuerinformationen - beispielsweise über einen separaten Steuerkanal des Übertragungsmediums - minimiert. Vorteilhaft wird durch die erfindungsgemäße, sendeseitige frequenzselektive Kanalentzerrung die üblicherweise bei einer empfangsseitigen Kanalentzerrung verursachte und mit einer Steigerung der Bitfehlerwahrscheinlichkeit verbundene Erhöhung des Pegels des Rauschsignals vermieden.

Gemäß einer vorteilhaften Ausgestaltung des erfindungsgemäßen Verfahrens werden in der zweiten Einheit die frequenzselektiven Übertragungseigenschaften des Übertragungsmediums ermittelt und frequenzspezifische Subträger eines weiteren mit Hilfe eines Multiträgerverfahrens gebildeten und von der zweiten an die erste Einheit übermittelten Sendesignals an die ermittelten, frequenzselektiven Übertragungseigenschaften des Übertragungsmediums angepaßt - Anspruch 2. Durch die Ermittlung des frequenzselektiven Übertragungseigenschaften sowohl in der ersten als auch in der zweiten Einheit ist vorteilhaft die sendeseitige Kanalentzerrung des Sendesignals sowohl in Downstream- als auch in Upstream-Richtung realisierbar, wodurch die Ausnutzung der zur Verfügung stehenden Übertragungsressourcen des zwischen der ersten und der zweiten Einheit angeordneten Übertragungsmediums weiter verbessert wird.

Vorteilhaft werden die frequenzselektiven Übertragungseigenschaften mit Hilfe des über das Übertragungsmedium an die erste bzw. zweiten Einheit übermittelten Sendesignals ermittelt, wobei zumindest ein Subträger des Sendesignals zur Übermittlung zumindest eines Pilotsignals genutzt wird - Anspruch 6. Durch die Übermittlung und die empfangsseitige Auswertung von Pilotsignalen ist ein Erfassen der Übertragungseigenschaften des zwischen der ersten und der zweiten Einheit angeordneten Übertragungsmediums mit geringem technischen und wirtschaftlichen Aufwand realisierbar. Insbesondere kann durch die Auswertung von empfangenen, frequenzselektiven Pilotsignalen die Übertragungsfunktion H(f) des Übertragungsmediums und insbesondere der Betrag der Übertragungsfunktion |H(f)| - Anspruch 5 - besonders einfach ermittelt werden.

Vorteilhaft ist der zumindest eine Subträger des Sendesignals zur Übermittlung des zumindest einen Pilotsignals durch ein Phasenmoduiationsverfahren moduliert, wobei das Pilotsignal eine bestimmte Referenz-Amplitude aufweist - Anspruch 7. Durch diese vorteilhafte Ausgestaltung werden die für die Übermittlung von Pilotsignalen genutzten Subbträger des Sendesignals zusätzlich - zumindest teilweise - für die Übermittlung von Nutzinformationen bzw. digitalen Datenströmen genutzt, so daß eine weitere Verbesserung der Ausnutzung der Übertragungsressourcen des Übertragungsmediums erreicht wird.

Bei eine große Anzahl von Subträgern aufweisenden Sendesignalen weist das Übertragungsmedium für benachbarte Subträger quasi identische Übertragungsparameter auf. Gemäß einer weiteren vorteilhaften Ausgestaltung des erfindungsgemäßen Verfahrens werden für die Ermittlung der frequenzselektiven Übertragungseigenschaften des Übertragungsmediums die amplitudenspezifischen und/oder phasenspezifischen Übertragungseigenschaften benachbarter Subträger des ankommenden Sendesignals gemittelt - Anspruch 8. Durch die vorteilhafte Mittelwertbildung über die ermittelten Übertragungseigenschaften von mehreren im Frequenzbereich benachbart angeordneten Subträgern des Sendesignals wird die Zahl der Schätzwerte und damit die Genauigkeit der sendeseitigen Kanalschätzung zweidimensional erhöht, ohne daß die spektrale Distanz zu benachbarten Subträgern zu groß wird.

Bei schnelle zeitliche Änderungen der Übertragungseigenschaften aufweisenden Übertragungsmedien bzw. bei zeitvarianten Übertragungsmedien werden gemäß einer weiteren vorteilhaften Ausgestaltung des erfindungsgemäßen Verfahrens zeitselektive, amptlitudenspezifische und/oder zeitselektive, phasenspezifische Übertragungseigenschaften des Ubertragungsmediums ermittelt, wobei mehrere über einen Zeitraum ermittelte frequenzselektive, amplitudenspezifische und/oder frequenzselektive, phasenspezifische Übertragungseigenschaften in der jeweiligen Einheit gespeichert und anschließend jeweils der Mittelwert über die gespeicherten frequenzselektiven, amplitudenspezifischen und/oder frequenzselektiven, phasenspezifischen Übertragungseigenschaften gebildet wird. Anschließend werden die frequenzspezifischen Subträger des Sendesignals an die zeitlich gemittelten Übertragungseigenschaften des Übertragungsmediums angepaßt - Anspruch 9. Durch die Mittelwertbildung über mehrere zeitlich hintereinander ermittelte, frequenzselektive Übertragungseigenschaften des Übertragungsmediums wird die erste Ableitung der zeitlichen Änderungen der Übertragungseigenschaften des Übertragungsmediums bei der Erfassung der Übertragungseigenschaften korrigiert und somit die Qualität der sendeseitigen Kanalschätzung und der sendeseitigen Kanalentzerrung weiter verbessert.

Vorteilhaft werden von der ersten Einheit die ermittelten, frequenzselektiven Übertragungseigenschaften an die zweite Einheit übermittelt und in der zweiten Einheit die frequenzspezifischen Subträger des weiteren Sendesignals an die übermittelten Übertragungseigenschaften des Übertragungsmediums angepaßt - Anspruch 10. Durch diese vorteilhafte Ausgestaltungsvariante werden die Übertragungseigenschaften des zwischen der ersten und der zweiten Einheit angeordneten Übertragungsmediums nur in einer Einheit ermittelt und das Ermittlungsergebnis in parametrisierter Form an die zweite Einheit übermittelt, wodurch der Aufwand für die Realisierung der sendeseitigen Kanalentzerrung sowohl in der ersten als auch in der zweiten Einheit gering gehalten wird.

Gemäß einer weiteren vorteilhaften Ausgestaltung wird bei der Ermittlung der frequenzselektiven Übertragungseigenschaften das Signalleistung-zu-Rauschleistung-Verhältnis S/N für jeden Subträger des Sendesignals bestimmt und die Subträger in Abhängigkeit des jeweils ermittelten Signalleistung-zu-Rauschleistung-Verhältnisses S/N für die Übermittlung von Infonnationen (dsu, dsd) genutzt - Anspruch 14. Vorteilhaft wird einem unter einem Grenzwert gemessenen Signalleistung-zu-Rauschleistung-Verhältnis S/N der entsprechende Subträger nicht für die Übermittlung von Informationen genutzt - Anspruch 15. Durch die Deaktivierung der jeweils ein mangelhaftes signalleistung-zu-Rauschleistung-Verhältnis S/N aufweisenden somit für eine Informationsübermittlung nicht nutzbaren Subträger kann die Sendeleistung der verbleibenden, für die Informationsübermittlung genutzten Subträger entsprechend erhöht werden. Durch die Erhöhung der Sendeleistung der für die Informationsübermittlung genutzten Subträger wird deren Bitfehlerwahrscheinlichkeit weiter reduziert.

Weitere vorteilhafte Ausgestaltungen des erfindungsgemäßen Verfahrens sind den weiteren Ansprüchen zu entnehmen.

Im folgendem wird das erfindungsgemäße Verfahren anhand von zwei Zeichnungen näher erläutert. Dabei zeigen

FIG 1　　eine zentrale, ein OFDM-Übertragungsverfahren realisierende Sende-/Empfangseinheit, und

FIG 2　　eine dezentrale, über das Übertragungsmedium "Funkkanal" mit einer zentralen Sende/Empfangseinheit gemäß FIG 1 in Verbindung stehende und ein OFDM-Übertragungsverfahren realisierende Sende-/Empfangseinheit.

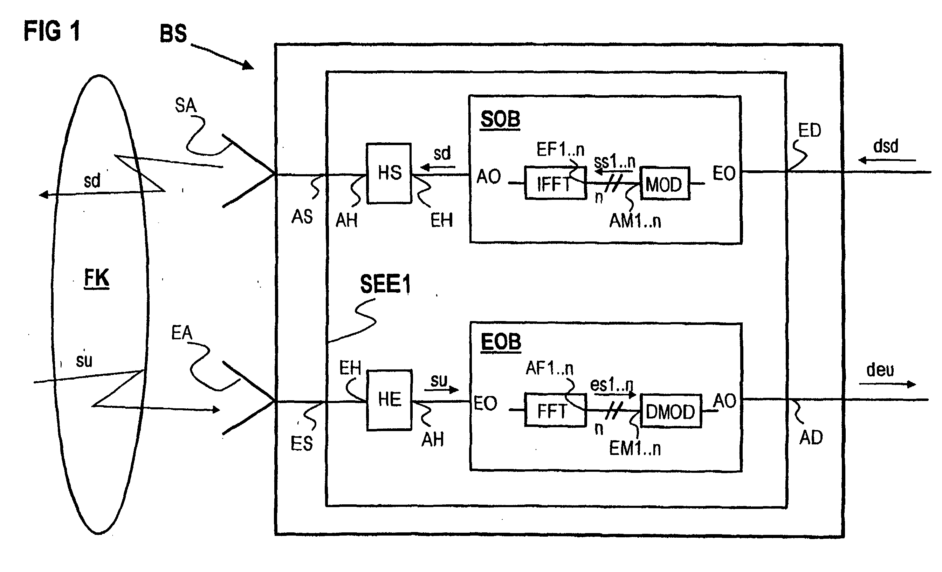

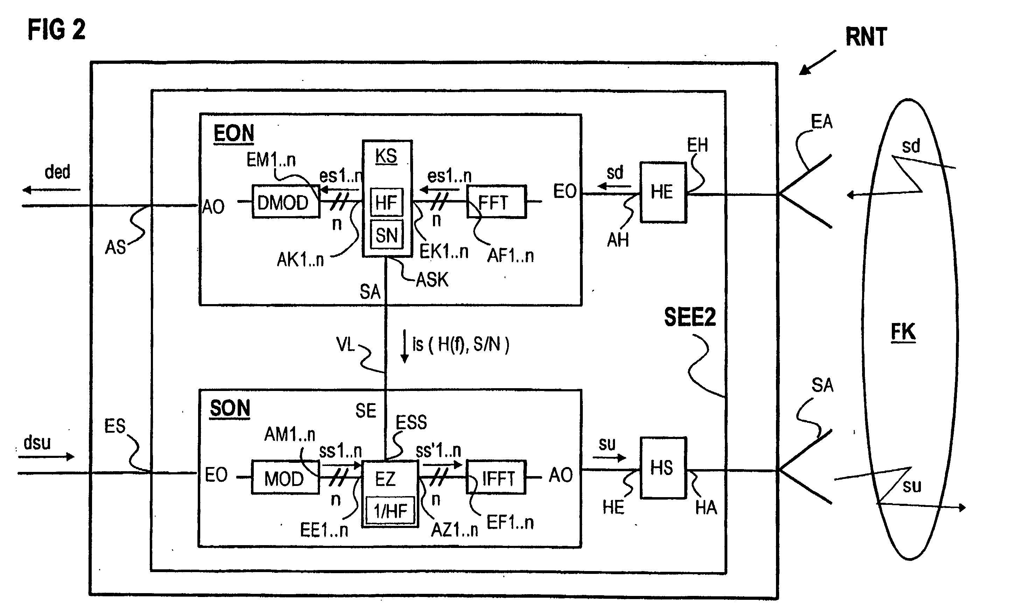

FIG 1 und FIG 2 zeigen jeweils in einem Blockschaltbild eine erste und zweite Sende- und Empfangseinheit SEE1,2, welche beispielsweise modulare Bestandteile von drahtlose Kommunikationsnetze realisierenden Sende- und Empfangsanlagen sein können. In diesem Ausführungsbeispiel ist die in FIG 1 dargestellte erste Sende-/Empfangseinheit SEE1 in einer das Zentrum einer Funkzelle bzw. eines Funkbereiches - nicht dargestellt - repräsentierenden Basisstation BS und die in FIG 2 dargestellte zweite Sende-/Empfangseinheit SSE2 in einer eine drahtlose Teilnehmeranschlußeinheit repräsentierenden, dezentralen, drahtlosen Netzabschlußeinheit RNT angeordnet; in FIG 2 ist nur eine drahtlose Netzabschlußeinheit RNT stellvertretend für mehrere der Basisstation BS bzw. dem Funkbereich zugeordnete, dezentrale Netzabschlußeinheiten dargestellt. An jede dezentrale, drahtlose Netzabschlußeinheit RNT ist zumindest eine dezentrale Kommunikationsendeinrichtung - nicht dargestellt - anschließbar, welche beispielsweise als Multimedia-Kommunikationsendgerät oder als ISDN-orientiertes Fernsprechendgerät ausgestaltet sein kann. Die dezentralen, drahtlosen Netzabschlußeinheiten RNT bzw. die daran angeschlossenen, dezentralen Kommunikationsendgeräte sind über das drahtlose Übertragungsmedium "Funkkanal" mit einem an die Basisstation BS angeschlossenen, übergeordneten Kommunikationsnetz - beispielsweise einem ISDN-orientierten Festnetz oder einem breitbandorientierten Multimedia-Kommunikationsnetz, nicht dargestellt - verbindbar.

Die in FIG 1 dargestellte erste Sende-/Empfangseinheit SEE1 weist einen Dateneingang ED auf, an welchen ein von dem übergeordneten Kommunikationsnetz an die dezentralen, drahtlosen Netzabschlußeinheiten RNT zu übermittelnder, digitaler, serieller Datenstrom dsd geführt ist. Der Dateneingang ED ist mit einem Eingang EO einer in der ersten Sende/Empfangseinheit SEE1 angeordneten OFDM-Sendeeinheit SOB verbunden, in welcher ein bereits in der Beschreibungseinleitung erläutertes Verfahren zur Bildung eines n Subträger aufweisendes OFDM-Signals sd realisiert ist. Die OFDM-Sendeeinheit SOB weist einen die n Subträger des OFDM-Signals sd modulierenden Modulator MOD auf, der über n Ausgänge AM1...n und n Verbindungsleitungen mit n frequenzselektiven, den n Subträgern des OFDM-Signals sd zugeordneten Eingängen EF1...n einer Transformationseinheit IFFT zur Durchführung einer Diskreten, Inversen "Fast-Fourier-Transformation" verbunden ist. Mit Hilfe der Transformationseinheit IFFT wird aus vom Modulator MOD an die frequenzselektiven Eingänge EF1...n der Transformationseinheit IFFT geführten, subträger-spezifischen Modulationssymbolen bzw. Sendesymbolen ss1...n ein zeitdiskretes OFDM-Signal erzeugt. In der OFDM-Sendeeinheit SOB sind weitere nicht dargestellte Einheiten - z.B. Parallel/Seriell-Wandler, Digital/Analog-Wandler, Filtereinheiten, Amplitudenbegrenzer - zur Umwandlung des zeitdiskreten OFDM-Signals in das analoge OFDM-Signal sd, beispielsweise unter Einhaltung von durch ETSI-Normierung vorgegebenen, für drahtlose Kommunikationsnetze bzw. Mobilfunksysteme definierten Spektrumsmasken, angeordnet. Über einen Ausgang AO ist die OFDM-Sendeeinheit SOB mit einem Eingang EH einer Hochfrequenz-Sendeeinheit HS verbunden, welche über einen Ausgang AH und über einen Antennenausgang AS der ersten Sende-/Empfangseinheit SEE1 an eine im Außenbereich der Basisstation BS angeordnete Sendeantenne SA angeschlossen ist. Durch einen in der Hochfrequenz-Sendeeinheit HS angeordneten Sendeverstärker - nicht dargestellt - wird das analoge OFDM-Sendesignal sd verstärkt, in das Hochfrequenzband bzw. RF-Band gemischt und anschließend über die Sendeantenne SA und über das drahtlose Übertragungsmedium "Funkkanal" an die im Funkbereich der Basisstation BS angeordneten, dezentralen Netzabschlußeinheiten RNT gesendet - auch als "Downstream"-Richtung bezeichnet.

Des Weiteren ist in der ersten Sende-/Empfangseinheit SEE1 eine OFDM-Empfangseinheit EOB angeordnet, welche über einen Eingang EO mit einem Ausgang AH einer Hochfrequenz-Empfangseinheit HE verbunden ist. Die Hochfrequenz-Empfangseinheit HE weist einen Eingang EH auf, welcher über einen Antenneneingang ES der ersten Sende-/Empfangseinheit SEE1 an eine im Außenbereich der Basisstation BS angeordnete Empfangsantenne EA angeschlossen ist. Durch in der Hochfrequenz-Empfangseinheit HE angeordnete Umwandlungsmittel - nicht dargestellt - wird ein von einer dezentralen Netzabschlußeinheit RNT an die Basisstation BS gesendetes und an der Empfangsantenne EA der Basisstation BS eingehendes OFDM-Signal su - auch als "Upstream"-Richtung bezeichnet - in das Zwischenfrequenzband, bzw. in das Basisband heruntergemischt und anschließend an den Eingang EO der OFDM-Empfangseinheit EOB weitergeleitet.

In der OFDM-Empfangseinheit EOB ist eine mehrere frequenzseiektive Ausgänge AF1...n aufweisende Transformationseinheit FFT zur Realisierung einer Diskreten "Fast-Fourier-Transformation" angeordnet, wobei jeder frequenzselektive Ausgang AF1...n einem Subträger des empfangenen OFDM-Signals su zugeordnet ist. Mit Hilfe der durch die Transformationseinheit FFT realisierten "Fast-Fourier-Transformation" wird das empfangene und in das Zwischenfrequenzband, bzw. Basisband heruntergemischte OFDM-Signal su - nach vorhergehender Diskretisierung und Digitalisierung mit Hilfe eines nicht dargestellten Analog/Digital-Wandlers- in den Frequenzbereich transformiert, d.h. es werden die im OFDM-Signal enthaltenen Modulationssymbole, bzw. Empfangssymbole es1...n der jeweiligen Subträger bestimmt und anschließend an die entsprechenden, frequenzselektiven Ausgänge AF1...n der Transformationseinheit FFT weitergeleitet. Die Ausgänge AF1...n der Transformationseinheit FFT sind über n Verbindungsleitungen mit n Eingängen EM1...n eines Demodulators DMOD verbunden. Aus den von der Transformationseinheit FFT an den Demodulator DMOD weitergeleiteten Empfangssymbolen es1...n werden mit Hilfe eines im Demodulator DMOD realisierten Demodulationsverfahrens die entsprechenden, über die jeweiligen Subträger übermittelten Empfangs-Codewörter bestimmt. Die bestimmten Empfangs-Codewörter werden anschließend mit Hilfe eines nicht dargestellten, der OFDM-Empfangseinheit EOB zugeordneten Parallel/Seriell-Wandlers in einen seriellen, digitalen Datenstrom deu umgewandelt, welcher über einen Datenausgang AD der ersten Sende-/Empfangseinheit SEE1 beispielsweise an das übergeordnete Kommunikationsnetz weitervermittelt wird.

Die gemäß FIG 2 in der dezentralen, drahtlosen Netzabschlußeinheit RNT angeordnete zweite Sende-/Empfangseinheit SEE2 weist eine OFDM-Empfangseinheit EON auf, welche über einen Eingang EO mit einem Ausgang AH einer in der zweiten Sende-/Empfangseinheit SEE2 angeordneten Hochfrequenz-Empfangseinheit HE verbunden ist. Die Hochfrequenz-Empfangseinheit HE ist über einen Eingang EH an eine im Außenbereich der Netzabschlußeinheit RNT angeordnete Empfangsantenne EA angeschlossen. Durch in der Hochfrequenz-Empfangseinheit HE angeordnete Umwandlungsmittel - nicht dargestellt - wird das von der Basisstation BS an die Netzabschlußeinheit RNT gesendete und an der Empfangsantenne EA eingehende OFDM-Signal sd in das Zwischenfrequenzband, bzw. in das Basisband heruntergemischt und anschließend an den Eingang EO der OFDM-Empfangseinheit EON weitergeleitet. In der OFDM-Empfangseinheit EON ist eine mehrere frequenzselektive Ausgänge AF1...n aufweisende Transformationseinheit FFT zur Realisierung einer Diskreten "Fast-Fourier-Transformation" angeordnet, wobei jeder frequenzselektive Ausgang AF1...n einem Subträger des empfangenen OFDM-Signals sd zugeordnet ist. Mit Hilfe der durch die Transformationseinheit FFT realisierten "Fast-Fourier-Transformation" wird das empfangene und in das Zwischenfrequenzband, bzw. Basisband heruntergemischte OFDM-Signal sd - nach vorhergehender Diskretisierung und Digitalisierung mit Hilfe eines nicht dargestellten Analog/Digital-Wandlers - in den Frequenzbereich transformiert, d.h. es werden die im empfangenen OFDM-Signal sd enthaltenen Modulationssymbole, bzw. Empfangssymbole es1...n der jeweiligen Subträger bestimmt und anschließend an die entsprechenden, frequenzselektiven Ausgänge AF1...n der Transformationseinheit FFT weitergeleitet. Die n Ausgänge AF1...n der Transformationseinheit FFT sind über n Verbindungleitungen mit n Eingängen EK1...n einer Kanalschätzungs-Einheit KS verbunden, welche über n Ausgänge AK1...n und n Verbindungsleitungen an entsprechende frequenzselektive Eingänge EM1...n eines in der OFDM-Empfangseinheit EON angeordneten Demodulators DMOD angeschlossen ist. Die von der Transformationseinheit FFT an die Kanal-Schätzungseinheit KS übermittelten frequenzselektiven Empfangssymbole es1...n werden an die Eingänge EM1...n des Demodulators DMOD weitergeleitet. In der Kanal-Schätzungseinheit KS sind erste Auswertemittel UF angeordnet, durch welche aus den an die Kanal-Schätzungseinheit KS herangeführten Empfangssymbolen es1...n die frequenzselektiven, amplitudenspezifischen Übertragungskanal-Eigenschaften des Übertragungsmediums "Funkkanal" ermittelt werden, d.h. für jeden Subträger die durch das Übertragungsmedium "Funkkanal" verursachten, frequenzselektiven Amplitudenverzerrungen - auch als Amplitudengang oder Betrag der Übertragungsfunktion des Funkkanals |H(f)| bezeichnet - bestimmt werden. Des Weiteren werden durch weitere in der Kanal-Schätzungseinheit KS angeordnete Auswertemittel SN aus den herangeführten Empfangssymbolen es1...n für jeden Subträger das S/N-Verhältnis ermittelt. Aus dem ermittelten, frequenzselektiven Amplitudengang |H(f)| und dem ermittelten frequenzselektiven S/N-Verhältnis wird durch in der Kanal-Schätzungseinheit KS angeordnete Signalerzeugungsmittel - nicht dargestellt - ein die Ermittlungsergebnisse übermitteIndes Informationssignal is erzeugt, welches über einen Ausgang ASK der Kanal-Schätzungseinheit KS an einen Steuerausgang SA der OFDM-Empfangseinheit EON weitergeleitet wird.

Die von der Kanal-Schätzungseinheit KS an den Demodulator DMOD weitergeleiteten, frequenzselektiven Empfangssymbole es1...n werden durch ein im Demodulator DMOD realisiertes Demodulationsverfahren in die über die jeweiligen Subträger übermittelten Empfangs-Codewörter umgewandelt. Aus den bestimmten Empfangs-Codewörtern werden anschließend mit Hilfe eines nicht dargestellten, der OFDM-Empfangseinheit EON zugeordneten Parallel/Seriell-Wandlers ein serieller, digitaler Datenstrom ded gebildet, welcher über einen Ausgang AO der OFDM-Empfangseinheit EON an einen Datenausgang AS der zweiten Sende-/Empfangseinheit SEE2 geführt und anschließend beispielsweise an eine an die dezentrale Netzabschlußeinheit RNT angeschlossene, dezentrale Ziel-Kommunikationsendeinrichtung - nicht dargestellt - übermittelt wird.

Der Steuerausgang SA der in der dezentralen Netzabschlußeinheit RNT angeordneten zweiten Sende-/Empfangseinheit SEE2 ist über eine Verbindungsleitung VL mit einem Steuereingang SE einer in der zweiten Sende-/Empfangseinheit SEE2 angeordneten OFDM-Sendeeinheit SON verbunden, in welcher ein Verfahren zur Bildung eines in Upstream-Richtung zu sendenden, n Subträger aufweisenden OFDM-Signals su realisiert ist. Die OFDM-Sendeeinheit SON ist über einen Eingang EO an einen Dateneingang ES der zweiten Sende-/Empfangseinheit SEE2 angeschlossen, an welchen beispielsweise ein von einer dezentralen Kommunikationsendeinrichtung über das drahtlose Übertragungsmedium "Funkkanal" an das übergeordnete Kommunikationsnetz zu übermitteInder, digitaler serieller Datenstrom dsu geführt ist. Der digitale, serielle Datenstrom dsu wird durch einen nicht dargestellten, der OFDM-Sendeeinheit SON zugeordneten Seriell/Parallel-Wandler in n parallele Sub-Datenströme aufgeteilt bzw. parallelisiert, wobei jeder der n Sub-Datenströme einem der n Subträger des OFDM-Signals zugeordnet ist. Die n parallelen Sub-Datenströme werden an einen in der OFDM-Sendeeinheit SON angeordneten und die n Subträger des OFDM-Signals os modulierenden Modulator MOD geführt, wobei die eingehenden n Sub-Datenströme durch ein im Modulator MOD realisiertes Modulationsverfahren in n frequenzselektive, d.h. den n Subträgern des OFDM-Signals su zugeordnete Modulationssymbole, bzw. Sendesymbole ss1...n umgewandelt werden. Die gebildeten n frequenzselektiven Sendesymbole ss1...n werden an n Ausgänge AK1...n des Modulators MOD weitergeleitet, der mit n frequenzselektiven, den n Subträgern des OFDM-Signals su zugeordneten Eingängen EE1...n einer Kanal-Entzerrer-Einheit EZ verbunden ist. Die Kanal-Entzerrer-Einheit EZ weist einen Steuereingang ESS auf, welcher an den Steuereingang SE der OFDM-Sendeeinheit SON angeschlossen und somit über die Verbindungsleitung VL mit dem Ausgang ASK der in der OFDM-Empfangseinheit EON angeordneten Kanal-Schätzungseinheit KS verbunden ist.

Die Kanal-Entzerrer-Einheit EZ weist Mittel zur Anpassung der vom Modulator MOD gebildeten und an die Kanal-Entzerrer-Einheit EZ weitergeleiteten Sendesymbole ss1...n an die in der OFDM-Empfangseinheit EON ermittelten, frequenzselektiven, amplitudenspezifischen Übertragungskanal-Eigenschaften des Übertragungsmediums "Funkkanal" auf - auch als "Entzerrung des Amplitudengangs" oder "Amplitudenentzerrung" bezeichnet - , d.h. die Amplituden der frequenzselektiven Sendesymbole ss1...n werden in Abhängigkeit von dem an den Steuereingang ESS übermittelten Informationssignal is korrigiert. Beispielsweise werden die frequenzselektiven Sendesymbole ss1...n mit dem Kehrwert des Betrags der ermittelten Übertragungsfunktion des Funkkanals - hier 1/|H(f)| - multipliziert. Die n korrigierten, frequenzselektiven Sendesymbole ss'1...n werden an n Ausgänge AZ1...n der Kanal-Entzerrer-Einheit EZ weitergeleitet, welche mit entsprechenden n frequenzselektiven, den n Subträgern des OFDM-Signals su zugeordneten Eingängen EF1...n einer Transformationseinheit IFFT zur Durchführung einer Diskreten, Inversen "Fast-Fourier-Transformation" verbunden sind. Mit Hilfe der Transformationseinheit IFFT werden aus den von der Kanal-Entzerrer-Einheit EZ an die frequenzselektiven Eingänge EF1...n der Transformationseinheit IFFT weitergeleiteten, subträger-spezifischen und korrigierten Sendesymbolen ss'1...n ein zeitdiskrete OFDM-Signal berechnet. In der OFDM-Sendeeinheit SON sind weitere nicht dargestellte Einheiten - z.B. Parallel/Seriell-Wandler, Digital/Analog-Wandler, Filtereinheiten, Amplitudenbegrenzer - zur Umwandlung des zeitdiskreten OFDM-Signals in ein analoges OFDM-Sendesignals su, beispielsweise unter Einhaltung der bereits genannten ETSI-Spektrumsmasken, angeordnet. Über einen Ausgang AO ist die OFDM-Sendeeinheit SON mit einem Eingang EH einer Hochfrequenz-Sendeeinheit HS verbunden, welche über einen Ausgang AH und über einen Antennenausgang AS der zweiten Sende-/Empfangseinheit SEE2 an eine im Außenbereich der dezentralen Netzabschlußeinheit RNT angeordnete Sendeantenne SA angeschlossen ist. Durch einen in der Hochfrequenz-Sendeeinheit HF angeordneten Sendeverstärker - nicht dargestellt - wird das analoge OFDM-Sendesignal su verstärkt, in das Hochfrequenzband bzw. RF-Band gemischt und anschließend über die Sendeantenne SA und über das drahtlose Übertragungsmedium "Funkkanal" in Upstream-Richtung an die Basisstation BS gesendet.

Es sei angemerkt, daß das beschriebene Ausführungsbeispiel nur eine funktionale Beschreibung des erfindungsgemäßen Verfahrens darstellt, d.h. die im Ausführungsbeispiel beschriebene Ausgestaltung der ersten und zweiten Sende/Empfangseinheit SEE1,2 ist auch durch alternative Ausgestaltungsvarianten realisierbar. Beispielsweise können die jeweils in einer Sende-/Empfangseinheit SEE1,2 angeordneten Hochfrequenz-Sendeeinheit und -Empfangseinheit HS, HE durch eine Hochfrequenz-Umsetzereinheit - nicht dargestellt - ersetzt werden, wobei die jeweiligen Sende- und Empfangswege mit Hilfe eines Schalters - nicht dargestellt - getrennt werden.

Im folgenden wird das erfindungsgemäße Verfahren zur maximalen Ausnutzung der durch das drahtlose Übertragungsmedium "Funkkanal" bereitgestellten Übertragungsressourcen näher erläutert.

Die in der ersten und zweiten Sende-/Empfangseinheit SEE1,2 angeordneten Hochfrequenz-Sende- und Empfangseinheiten HS, HE sind derart ausgestaltet, daß in Downstream- und Upstream-Richtung gesendete OFDM-Signale sd, su im Rahmen des TDD-Übertragungsverfahrens - Time Division Duplex - übermittelt werden. Beim TDD-Übertragungsverfahren werden die zwischen der Basisstation BS und den drahtlosen, dezentralen Netzabschlußeinheiten RNT zu übermittelnde Informationen abwechselnd mit Hilfe von im gleichen Frequenzbereich ausgesendeten Signal-Bursts bestimmter zeitlicher Ausdehnung übermittelt. Dabei werden die in den Netzabschlußeinheiten RNT und in der Basisstation BS angeordneten Sende-/Empfangseinheiten SEE1/2 abwechselnd in den Sende- und Empfangsbetrieb geschaltet. Bei Einsatz des TDD-Übertragungsverfahrens weist das drahtlose Übertragungsmedium "Funkkanal" reziproke Eigenschaften auf, d.h. mit Hilfe des von der Basisstation BS in Downstream-Richtung burstartig ausgesendeten und von einer dezentralen Netzabschlußeinheit RNT empfangenen OFDM-Signals sd ist ein Ermitteln bzw. eine Schätzung der frequenzselektiven, amplitudenspezifischen und/oder phasenspezifischen Übertragungskanaleigenschaften des Übertragungsmediums "Funkkanal" für das von der dezentralen Netzabschlußeinheit RNT in Upstream-Richtung zu übermittelnde OFDM-Signal su möglich.

Gemäß einer ersten Ausgestaltungsvariante des erfindungsgemäßen Verfahrens ist in dem in der OFDM-Sendeeinheit SOB der ersten Sende-/Empfangseinheit SEE1 angeordneten Modulator MOD ein differentielles Phasen-Modulationsverfahren - Differential Phase Shift Keying - realisiert, beispielsweise ein 64-DPSK. Bei Anwendung eines differentiellen Modulationsverfahrens ist bei der anschließenden Demodulation in der entsprechenden OFDM-Empfangseinheit EON bzw. in dem darin angeordneten Demodulator DMOD keine Trägerrückgewinnung des empfangenen OFDM-Signals sd und keine exakte Rückgewinnung des Bittaktes erforderlich. Um ein empfangsseitiges Ermitteln der frequenzselektiven Übertragungseigenschaften des Übertragungsmediums "Funkkanal" - im folgenden auch als Kanalschätzung bezeichnet - zu ermöglichen, ist der in der Basisstation BS angeordnete Modulator MOD derart ausgestaltet, daß eine bestimmte Anzahl der an den n-Ausgängen AM1...n des Modulators MOD anliegenden Sendesymbole ss1...n als Pilot-Symbole mit definierter Referenz-Amplitude ausgestaltet sind, d.h. ein Teil der Subträger des in Downstream-Richtung zu übermittelnden OFDM-Signals sd wird zur Übermittlung jeweils eines Pilottones bzw. Pilotsignals mit definierter Referenz-Amplitude genutzt. Beispielsweise werden 10 % der zur Informationsübermittlung nutzbaren Subträger des OFDM-Signals sd für die Übermittlung von Pilottönen genutzt.

Aus dem an der Empfangsantenne EA der Netzabschlußeinheit RNT eingehenden OFDM-Signal sd werden durch die in der OFDM-Empfangseinheit EON angeordnete Transformationseinheit FFT die übermittelten Empfangssymbole es1...n der jeweiligen Subträger des empfangenen OFDM-Signals sd ermittelt und an die Kanal-Schätzungseinheit KS weitergeleitet. Durch die in der Kanal-Schätzungseinheit KS angeordneten ersten Auswertemittel HF werden aus den an den Eingängen EK1...n anliegenden und als Pilotsymbole ausgestalteten Empfangssymbolen es1...n die frequenzselektiven, amplitudenspezifischen Übertragungseigenschaften, bzw. die frequenzselektiven Dämpfungseigenschaften des zwischen der Basisstation BS und der dezentralen, drahtlosen Netzabschlußeinheit RNT angeordneten Übertragungsmediums "Funkkanal" FK ermittelt, d.h. der Amplitudengang bzw. der Betrag der Übertragungsfunktion $|H(f)|$ des Übertragungsmediums "Funkkanal" FK bestimmt. Die ermittelten Übertragungseigenschaften des Übertragungsmediums "Funkkanal" FK werden anschließend mit Hilfe des Informationssignals is über die Verbindungsleitung VL an den Steuereingang SE der in der dezentralen Netzabschlußeinheit RNT angeordneten OFDM-Sendeeinheit SON übermittelt. Des Weiteren werden in der OFDM-Empfangseinheit EON die von der Kanal-Schätzungseinheit KS an die n-Eingänge EM1...n des Demodulators DMOD weitergeleiteten Empfangssymbole es1...n mit Hilfe des im Demodulator DMOD realisierten, differentiellen bzw. inkohärenten Demoduiationsverfahren in die über die jeweiligen Subträger des OFDM-Signals sd übermittelten Empfangscodewörter umgewandelt, aus welchen der an den Ausgang AS der zweiten Sende/Empfangseinheit SEE2 geführte, serielle, digitale Datenstrom ded gebildet wird.

Erfindungsgemäß wird in Abhängigkeit der durch die OFDM-Empfangseinheit EON ermittelten und an die OFDM-Sendeeinheit SON weitergeleiteten Übertragungskanal-Eigenschaften des Übertragungsmediums "Funkkanal" das in Upstream-Richtung an die Basisstation BS zu sendende OFDM-Signal su erzeugt. Dazu wird der am Eingang EO der in der zweiten Sende/ Empfangseinheit SEE2 angeordneten OFDM-Sendeeinheit SON eingehende und an die Basisstation BS zu übermittelnde digitale, serielle Datenstrom dsu parallelisiert und mit Hilfe des Modulators MOD in die den n-Subträgern des OFDM-Signals su zugeordneten Sendesymbole ss1...n umgewandelt. Die gebildeten Sendesymbole ss1...n werden an die n Eingänge EE1...n der Kanal-Entzerrereinheit EZ weitergeleitet und durch die darin angeordneten Korrekturmittel 1/HF an die ermittelten, frequenzselektiven, amplitudenspezifischen Übertragungskanal-Eigenschaften des Übertragungsmediums "Funkkanal" FK angepaßt - auch als sendeseitige Amplitudenentzerrung bezeichnet. Die durch die Korrektur-Mittel 1/HF realisierte, sendeseitige Amplitudenentzerrung erfolgt in der Art und Weise, daß die Sendesymbole ss1...n der einzelnen Subträger des OFDM-Signals su mit einem den Betrag der Inversen der ermittelten Übertragungsfunktion $H_n(f)$ darstellenden Faktor - hier $1/|H_n(f)|$ für $0 \leq n \leq N-1$ - multipliziert wird, wobei n die Länge der in der Transformationseinheit IFFT realisierten Fourier-Transformation und $H_n(f)$ die Übertragungsfunktion des des n-ten Subträgers des OFDM-Signals su darstellt.

Die beschriebene, erfindungsgemäße, sendeseitige, frequenzselektive Amplitudenentzerrung hat die Wirkung, das alle Subträger des von der dezentralen Netzabschlußeinheit RNT in Upstream-Richtung an die Basisstation BS gesendeten OFDM-Signais su bei Eintreffen an der Empfangsantenne EA der Basisstation BS die gleichen Empfangspegel bzw. Signal-Amplitudenwerte aufweisen. Da alle Subträger des in der Basisstation BS empfangenen OFDM-Signals su die gleichen Empfangspegel aufweisen, ist das Signalleistung-zu-Rauschleistung-Verhältnis S/N für alle Subträger identisch. Somit sind alle Subträger sendeseitig, d.h. mit Hilfe der in der dezentralen Netzabschlußeinheit RNT angeordneten OFDM-Sendeeinheit SON, bzw. mit Hilfe des dort angeordneten Modulators MOD mit der gleichen Modulations-Stufenzahl modulierbar, so daß die maximale Ausnutzung der Übertragungsressourcen der einzelnen Subträger des OFDM-Signals su erreicht wird. Beispielsweise können bei nahe der Basisstation BS angeordneten, dezentralen Netzabschlußeinheiten RNT die einzelnen Subträger des in Upstream-Richtung an die Basisstation BS zu übermittelnden OFDM-Signals su mit Hilfe der 64-QAM - Quadratur Amplituden-Modulation - moduliert werden. Mit zunehmenden Abstand der dezentralen Netzabschlußeinheit RNT zur Basisstation BS, d.h. mit zunehmenden Dämpfungseigenschaften des Übertragungsmediums "Funkkanal" FK, wird die Modulations-Stufenzahl reduziert. Vorteilhaft ist aufgrund des identischen S/N-Verhältnisses des Subträger des in der Basisstation BS empfangenen OFDM-Signals su keine subträgerindividuelle Modulations-Stufenzahl zur Steuerung der Demodulation des empfangenen OFDM-Signals su erforderlich, so daß vorteilhaft der Steueraufwand für die Modulation und Demodulation des OFDM-Signals su minimal ist. Durch das Vermeiden einer subträgerindividuellen Modulations-Stufenzahl wird kein zusätzlicher Overhead für die Übermittlung von zusätzlichen, die subträgerindividuelle Modulation und Demodulation steuernde Steuerinformationen erzeugt, und somit eine Reduzierung der Übertragungskapazität des Übertragungsmediums "Funkkanal" vermieden.

Alternativ kann anstelle einer Erhöhung der Modulations-Stufenzahl des in Upstream-Richtung zu sendenden OFDM-Signals su die Sendeleistung des auszusendenden OFDM-Signals su entsprechend reduziert werden. Die Absenkung der Sendeleistung kann beispielsweise in der Hochfrequenz-Sendeeinheit HS der dezentralen Netzabschlußeinheit RNT erfolgen. Durch die Absenkung der Sendeleistung wird die gegenseitige Störung der Subträger von innerhalb eines Funkbereiches gesendeter OFDM-Signale sd, su - auch als Inter Cell Interference ICI bezeichnet - minimiert und dadurch die Übertragungskapazität des innerhalb eines Funkbereiches angeordneten Gesamtsystems gesteigert.

Gemäß einer weiteren vorteilhaften Ausgestaltungsvariante des erfindungsgemäßen Verfahrens weist die Kanal-Schätzungseinheit KS der in der dezentralen Netzabschlußeinheit RNT angeordneten OFDM-Empfangseinheit EON weitere Auswertemittel SN zur Erfassung der subträgerindividuellen S/N-Verhältnisse der jeweiligen Subträger des empfangenen OFDM-Signals sd auf. Die jeweils mit Hilfe der weiteren Auswertemittel S/N erfaßten, subträgerindividuellen S/N-Verhältnisse werden zusätzlich neben den erfaßten amplitudenspezifischen Übertragungseigenschaften H (f) des Übertragungsmediums FK mit Hilfe des Informationssignals is über die Verbindungsleitung VL an die in der dezentralen Netzabschlußeinheit RNT angeordnete OFDM-Sendeeinheit SON, bzw. an die dort angeordnete Kanal-Entzerrereinheit EZ übermittelt.

In der Kanal-Entzerrereinheit EZ sind weitere Korrekturmittel - hier nicht dargestellt - angeordnet, durch welche in Abhängigkeit der an den Steuereingang ESS übermittelten S/N-Verhältnisse diejenigen, ungünstige S/N-Verhältnisse aufweisende Subträger, bzw. diejenigen Subträger mit einem unter einem Grenzwert gemessenen S/N-Verhältnis deaktiviert und somit nicht für die Informationsübermittlung genutzt werden. Beispielsweise wird bei einen großen Abstand zur Basisstation BS aufweisenden dezentralen Netzabschlußeinheiten RNT nur jeder zweite oder vierte Subträger des an die Basisstation BS zu sendenden OFDM-Signals su zur Informationsübermittlung genutzt, wobei die Sendeleistung der für die Informationsübermittlung genutzten Subträger entsprechend erhöht wird. Durch die Erhöhung der Sendeleistung der für die Informationsübermittlung genutzten Subträger wird die Bitfehlerwahrscheinlichkeit weiter reduziert. Deaktivierte Subträger des empfangenen OFDM-Signals können in der OFDM-Empfangseinheit EON, EOB durch eine einfache Amplitudenberechnung erkannt werden.

Da für die sendeseitige, in der dezentralen Netzabschlußeinheit RNT realisierte Ermittlung der frequenzselektiven, amplitudenspezifischen Übertragungseigenschaften des Übertragungsmediums "Funkkanal" FK nur die Auswertung des Amplitudenwertes der von der Basisstation BS an die dezentrale Netzabschlußeinheit RNT übermittelten Pilotsymbole bzw. Pilottöne durch die in der dezentralen Netzabschlußeinheit RNT angeordnete Kanal-Schätzungseinheit KS erforderlich ist, können die Phaseninformationen der von der Basisstation BS an die dezentrale Netzabschlußeinheit RNT gesendeten Pilotsymbole bzw. Pilottöne des OFDM-Signale sd zusätzlich für die Übermittlung der digitalen Informationen dsd genutzt werden. Die Pilotsymbole bzw. Pilottöne übermittelnden Subträger des OFDM-Signals sd können beispielsweise mit Hilfe eines absoluten oder differentiellen Phasenmodulationsverfahren mit definierter Referenz-Amplitude moduliert werden, wodurch eine vorteilhafte Ausnutzung Übertragungskapazität des Übertragungsmediums "Funkkanal" erreicht wird.

Vorteilhaft sind die in der Basisstation BS oder dezentralen Netzabschlußeinheit RNT angeordneten OFDM-Sendeeinheiten SOB, SON, bzw. die dort angeordneten Modulatoren MOD derart ausgestaltet, daß die nicht für die Übermittlung von Pilottönen genutzten Subträger der OFDM-Signale sd, su im Rahmen eines kohärenten, bzw. absoluten Modulationsverfahrens, beispielsweise einer m-stufigen QAM, moduliert werden, da m-stufige QAM-Modulationsverfahren auch bei Übertragungsmedien mit ungünstigen S/N-Verhältnissen einsetzbar sind.

Bei Verwendung von kohärenten, m-stufigen Modulationsverfahren sind in den entsprechenden, in der Basisstation BS bzw. in der dezentralen Netzabschlußeinheit RNT angeordneten OFDM-Empfangseinheiten EON, EOB zusätzliche Mittel - nicht dargestellt - zur gemäß dem Stand der Technik erforderlichen, empfangsseitigen Kanalschätzung, bzw. Kanalentzerrung, insbesondere zur Phasenentzerrung - d.h. Korrektur der Phasenlagen - der jeweils empfangenen Subträger des empfangenen OFDM-Signals sd, su erforderlich. Um in einer OFDM-Empfangseinheit EON, EOB eine Korrektur der Phasenlagen der eingehenden Subträger zu ermöglichen, wird auf Seiten der OFDM-Sendeeinheit SOB, SON der erste Subträger des OFDM-Signals sd, su mit einer definierten Phase - Z.B. $\varphi = 0$ Grad - gesendet. Durch das Übertragungsmedium "Funkkanal" FK wird die Phase des ersten Subträgers um beispielsweise $\Delta\varphi$ gedreht. Der dicht benachbart zum ersten Subträger angeordnete zweite Subträger wird dabei ebenfalls um $\Delta\varphi$ gedreht. Um die ursprünglichen Phasenlagen des gesendeten OFDM-Signals sd, su wieder herzustellen, muß durch die in der OFDM-Empfangseinheit EON, EOB angeordneten Korrekturmittel der zweite Subträger mit dem komplexen Faktor $e^{-j\Delta\varphi}$ multipliziert werden. Durch den über den ersten Subträger übermittelten Pilotton mit definierter Sendephase kann mit Hilfe der Korrekturmittel die durch das Übertragungsmediums "Funkkanal" FK verursachte Phasenverschiebung $\Delta\varphi$ des ersten Subträgers erfaßt und die Phasenlage des benachbarten zweiten Subträgers des empfangenen OFDM-Signals entsprechend korrigiert werden. Nach der empfangsseitigen Korrektur der Phasenlage bzw. Phasenentzerrung werden mit Hilfe des Demodulators die über den zweiten Subträger übermittelten Informationen entschieden. In Abhängigkeit des Entscheidungsergebnisses wird die Phasenverschiebung des zweiten Subträgers ermittelt. Mit der ermittelten Phasenverschiebung des zweiten Subträgers wird anschließend in beschriebener Art und Weise die Phasenlage des dritten Subträgers korrigiert usw..

Gemäß einer weiteren vorteilhaften Ausgestaltung des erfindungsgemäßen Verfahrens weist die in der Basisstation BS angeordnete OFDM-Empfangseinheit EOB ebenfalls eine Kanalschätzungseinheit KS - nicht dargestellt - auf, durch welche die mit Hilfe des empfangenen OFDM-Signals su übermittelten Empfangssymbole es1...n ausgewertet und daraus in beschriebener Art und Weise die frequenzselektiven, amplitudenspezifischen Funkkanaleigenschaften des Übertragungsmediums "Funkkanal" FK ausgewertet und über eine nicht dargestellte Verbindungsleitung an eine weitere in der OFDM-Sendeeinheit SOB der Basisstation BS angeordnete Kanal-Entzerrereinheit - nicht dargestellt - übermittelt werden. Durch diese vorteilhafte Ausgestaltung können auch die von der Basisstation BS in Downstream-Richtung an die dezentralen Netzabschlußeinheiten RNT zu übermittelnden OFDM-Signale sd bzw. die darin enthaltenen Subträger an die Übertragungseigenschaften des Übertragungsmediums "Funkkanal" angepaßt werden. Durch die so realisierte sendeseitige Entzerrung des Amplitudengangs sowohl in Downstream- als auch in Upstream-Richtung wird die Ausnutzung der Übertragungskapazität des Übertragungsmediums "Funkkanal" FK weiter verbessert. Dies setzt jedoch die bereits beschriebene Verwendung eines Teils der Subträger des von der dezentralen Netzabschlußeinheit RNT an die Basisstation BS zu übermittelnden OFDM-Signal su zur Übermittlung von Pilotsymbolen bzw. Pilottönen voraus. Vorteilhaft ist der in der OFDM-Sendeeinheit SON der dezentralen Netzabschlußeinheit RNT angeordnete Modulator MOD derart ausgestaltet, daß die für die Übermittlung von Pilotsymbolen genutzten Subträger des OFDM-Signals su mit Hilfe eines Phasenmodulationsverfahrens - beispielsweise einem QPSK-Modulationsverfahrens - mit definierter Referenz-Sendeamplitude moduliert werden. Durch die Verwendung der Phasenmodulation werden die in Upstream-Richtung übermittelten Pilotsymbole bzw. Pilottöne zumindest teilweise auch für die Übermittlung des digitalen Datenstroms dsu genutzt.

Um die Genauigkeit der Kanalschätzung in der dezentralen Netzabschlußeinheit RNT und eventuell in der Basisstation BS zu erhöhen, können die jeweils Pilottöne bzw. Pilotsymbole übermittelnden Subträger eines OFDM-Signals sd, su mit erhöhter Leistung übermittelt werden.

Gemäß einer weiteren Ausgestaltungsvariante wird die sendeseitige Kanalschätzung nur durch die in der dezentralen Netzabschlußeinheit RNT angeordnete Kanalschätzungseinheit KS durchgeführt und anschließend die ermittelten, frequenzselektiven, amplitudenspezifischen Übertragungseigenschaften des Übertragungsmediums "Funkkanal" in parametrisierter Form an die Basisstation BS bzw. an die dort angeordnete OFDM-Sendeeinheit SOB übermittelt. Durch eine in der OFDM-Sendeeinheit SOB der Basisstation BS angeordnete Kanal-Entzerrereinheit - nicht dargestellt - erfolgt mit Hilfe der übermittelten, parametrisierten Übertragungseigenschaften die sendeseitige Entzerrung des Amplitudengangs der Subträger des von der Basisstation BS in Downstream-Richtung zu übermittelnden OFDM-Signals sd.

Vorteilhaft werden nur die zeitlichen Änderungen der Übertragungseigenschaften an die Basisstation BS übermittelt und somit der Overhead bei der Übermittlung der Übertragungseigenschaften minimiert.

Bei eine große Anzahl von Subträgern aufweisenden OFDM-Signalen sd, su weist das Übertragungsmedium "Funkkanal" FK für benachbarte Subträger praktisch identische Übertragungseigenschaften auf. Vorteilhaft werden für die in einer OFDM-Empfangseinheit EON, EOB durchgeführte, sendeseitige Kanalschätzung neben den direkt benachbarten Subträgern auch die im Frequenzbereich daran angrenzenden Subträger für die Ermittlung der frequenzselektiven Übertragungseigenschaften des Übertragungsmediums berücksichtigt, d.h. es wird eine Mittelwertbildung über ermittelte Übertragungseigenschaften von mehreren, im Frequenzbereich benachbart angeordneten Subträgern durchgeführt. Die Mittelwertbildung hat den Vorteil, daß die Zahl der Schätzwerte und damit die Genauigkeit der sendeseitigen Kanalschätzung zweidimensional erhöht wird, ohne daß die spektrale Distanz zu benachbarten Subträgern zu groß wird.

Bei schnelle zeitliche Änderung aufweisenden Funkkanälen - auch als zeitvariante Übertragungskanäle bzw. Funkkanäle bezeichnet - werden gemäß einer weiteren vorteilhaften Ausgestaltung des erfindungsgemäßen Verfahrens auch die zeitlich nachfolgenden, d. h. die innerhalb eines bestimmten Zeitraums an der Empfangsantenne EA eingehenden OFDM-Signale bzw. die darin enthaltenen Empfangssymbole es1...n bei der in der Kanalschätzungseinheit KS realisierten Kanalschätzung berücksichtigt. Für die Realisierung dieser Ausgestaltungsvariante ist ein Speichern der zeitlich hintereinander empfangenen Empfangssymbole es1...n oder ein Speichern der jeweils ermittelten, frequenzselektiven Übertragungseigenschaften in einem in der ersten oder zweiten Sende-/Empfangseinheit SEE1, 2 angeordneten Speicher - nicht dargestellt - erforderlich. Durch die Mittelwertbildung über mehrere, jeweils einem Subträger zugehörigen und zeitlich hintereinander empfangenen Empfangssymbole es1...n im Rahmen der in der Kanal-Schätzungseinheit KS durchgeführten, sendeseitigen Kanalschätzung wird die erste Ableitung der zeitlichen Änderungen der Übertragungseigenschaften des Übertragungsmediums "Funkkanal" FK bei der Erfassung der Übertragungseigenschaften korrigiert. Vorteilhaft werden die im Frequenzbereich symmetrisch um den aktuellen Subträger angeordneten Subträger, bzw. die über diesen Subträger übermittelten Empfangssymbole es1...n bei der Mittelwertbildung berücksichtigt. Alternativ kann die Mittelwertbildung auch in der Kanal-Entzerrereinheit EZ der OFDM-Sendeeinheit SON erfolgen.

Die in der Kanalschätzungseinheit KS mit Hilfe der Auswertemittel H(f) durchgeführte Ermittlung der frequenzselektiven, amplitudenspezifischen Übertragungseigenschaften des Übertragungsmediums "Funkkanal" FK - auch als Berechnung der Amplitudenschätzwerte bezeichnet - ist relativ aufwendig. Für die Berechnung der Amplitudenwerte aller empfangenen Empfangssymbole es1...n eines OFDM-Signals sd erfolgt im Rahmen der Berechnungsvorschrift

$$\sqrt{I^2 + Q^2} = Amplitude$$

wobei I den Imaginärteil und Q den Realteil eines empfangenen, komplexen Empfangssymbols es1...n darstellt. Die Berechnung der jeweiligen frequenzselektiven Amplitudenschätzwerte kann zumindest teilweise seriell durchgeführt werden, so daß der technische Aufwand bzw. Hardware-Aufwand für die Berechnung der Amplitudenschätzwerte gering gehalten wird.

Gemäß einer vorteilhaften Ausgestaltung erfolgt die Berechnung der Amplitudenschätzwerte aus den jeweils empfangenen, frequenzselektiven Empfangssymbolen es1...n mit Hilfe von in einer als "look-up-table" bezeichneten Tabelle gespeicherten Werten.

Dazu werden die jeweils- möglichen Empfangswerte des Imaginärteils I und des Realteils Q eines Empfangssymbols es1...n zu einer Tabellenadresse zusammengefaßt und in der look-up-table gespeichert. Des Weiteren wird jeder gespeicherten Tabellenadresse der zugehörige Korrekturfaktor - hier $1/|H_n(f)|$ - zugeordnet und in dem entsprechenden Tabelleneintrag gespeichert. Die den jeweiligen Tabellenadressen zugeordneten Korrekturfaktoren repräsentieren diejenigen Werte, mit denen die jeweiligen Sendesymbole ss1...n des auszusendenden OFDM-Signals sd, su multipliziert werden. Vorteilhaft werden der Umfang bzw. die Anzahl der Einträge der look-up-table gering gehalten, wenn diese auf einen Quadranten der komplexen Ebene beschränkt wird, wobei Sendesymbole ss1...n mit negativen Imaginär- und Realteil-Werten vor der sendeseitigen Amplituden-Entzerrung invertiert werden.

Gemäß einer weitere vorteilhaften Ausgestaltung wird die Multiplikation der Subträger bzw. der über die Subträger zu übermittelnden Sendesymbole ss1...n mit dem ermittelten Korrekturfaktor - hier $1/|H_n(f)|$ durch eine Addition bzw. Subtraktion mit ebenfalls in einer look-up-table gespeicherten Werten realisiert. Durch diese vorteilhafte Ausgestaltung wird der Rechenaufwand für die Korrektur der Sendesymbole bei der Amplitudenentzerrung weiter reduziert.

**Patentansprüche**

1. Verfahren zum Übermitteln von Informationen über ein bestimmte Übertragungseigenschaften aufweisendes Über-tragungsmedium mit Hilfe eines Multiträgerverfahrens,
   bei dem von einer ersten Einheit die zu übermittelnden Informationen durch ein mehrere frequenzspezifische Subträger aufweisendes Sendesignal über das Übertragungsmedium an eine zweite Einheit übermittelt werden,
   **bei dem**

   - die zweite Einheit (BS) an die erste Einheit (RNT) mindestens einen frequenzspezifischen Subträger eines weiteren Sendesignals, der zur Übermittlung mindestens eines Pilotsignals genutzt wird, aussendet,
   - in der ersten Einheit (RNT) anhand des Pilotsignals die frequenzselektiven Übertragungseigenschaften des Übertragungsmediums (PK) ermittelt werden, und
   - in der ersten Einheit (RNT) die frequenzspezifischen Subträger des an die zweite Einheit (BS) zu übermittelnden Sendesignals (su) an die ermittelten frequenzselektiven Übertragungseigenschaften des Übertragungsmediums (FK) angepasst werden.

2. Verfahren nach Anspruch 1,

**dadurch gekennzeichnet,**

   - **dass** die erste Einheit (RNT) an die zweite Einheit (BS) mindestens einen frequenzspezifischen Subträger des Sendesignals, der zur Übermittlung mindestens eines Pilotsignals genutzt wird, aussendet,
   - **dass** in der zweiten Einheit (BS) anhand des Pilotsignals die frequenzselektiven Übertragungseigenschaften des Übertragungsmediums (FK) ermittelt werden,
   - **dass** in der zweiten Einheit (BS) die frequenzspezifischen Subträger des an die erste Einheit (RNT) zu übermittelnden Sendesignals (sd) an die frequenzselektiven Übertragungseigenschaften des Übertragungsmediums (FK) angepasst werden.

3. Verfahren nach Anspruch 1 oder 2,
   **dadurch gekennzeichnet,**
   **daß** als Übertragungseigenschaften die frequenzselektiven amplitudenspezifischen und/oder frequenzselektiven phasenspezifischen Eigenschaften des Übertragungsmediums (FK) ermittelt werden.

4. Verfahren nach einem der Ansprüche 1 bis 3,
   **dadurch gekennzeichnet,**
   **dass** bei der Ermittlung der Übertragungseigenschaften eine Übertragungsfunktion H(f) des Übertragungsmediums (FK) ermittelt wird.

5. Verfahren nach Anspruch 4,
   **dadurch gekennzeichnet,**
   **dass** der Betrag |H(f)|der ermittelten Übertragungsfunktion H(f) die amplitudenspezifischen Übertragungseigenschaften des Übertragungsmediums (FK) repräsentiert.

6. Verfahren nach einem der vorhergehenden Ansprüche,
   **dadurch gekennzeichnet,**
   **dass** der zumindest eine Subträger des mindestens einen Pilotsignals durch ein Phasenmodulationsverfahren moduliert wird, wobei das Pilotsignal eine bestimmte Referenz-Amplitude aufweist.

7. Verfahren nach einem der Ansprüche 3 bis 6,
   **dadurch gekennzeichnet,**
   **dass** für die Ermittlung der frequenzselektiven Übertragungseigenschaften des Übertragungsmediums (FK) die amplitudenspezifischen und/oder phasenspezifischen Übertragungseigenschaften von benachbarten Pilotsignalen gemittelt werden.

8. Verfahren nach einem der Ansprüche 3 bis 7,
   **dadurch gekennzeichnet,**

- **dass** für die Ermittlung der frequenzselektiven Übertragungseigenschaften des Übertragungsmediums (FK) die amplitudenspezifischen und/oder phasenspezifischen Übertragungseigenschaften bei jeder Einheit über einen Zeitraum ermittelt und bei der jeweiligen Einheit abgespeichert werden,
- **dass** jeweils der Mittelwert über die gespeicherten Übertragungseigenschaften gebildet wird,
- **daß** die Subträger des zu übermittelnden Sendesignals (su, sd) bei der jeweiligen Einheit an die zeitlich gemittelten Übertragungseigenschaften angepasst werden.

9. Verfahren nach einem der vorhergehenden Ansprüche,
   **dadurch gekennzeichnet,**

   - **daß** von der ersten Einheit (RNT) die ermittelten frequenzselektiven Übertragungseigenschaften an die zweite Einheit (BS) übermittelt werden, und
   - **daß** in der zweiten Einheit (BS) die frequenzspezifischen Subträger des von ihr zu übermittelnden Sendesignals (sd) an die übermittelten Übertragungseigenschaften des Übertragungsmediums (FK) angepasst werden.

10. Verfahren nach Anspruch 8 und 9,
    **dadurch gekennzeichnet,**
    **dass** von der ersten Einheit (RNT) nur die zeitlichen Änderungen der Übertragungseigenschaften an die zweite Einheit (BS) übermittelt werden.

11. Verfahren nach einem der Ansprüche 4 bis 10,
    **dadurch gekennzeichnet,**
    **dass** im Rahmen der Anpassung des Sendesignals (su, sd) an die Übertragungseigenschaften des Übertragungsmediums (FK) die Subträger des Sendesignals (su, sd) mit der invertierten Übertragungsfunktion 1/H(f) oder mit dem invertierten Betrag der Übertragungsfunktion 1/|H(f)| multipliziert werden.

12. Verfahren nach einem der vorherigen Ansprüche,
    **dadurch gekennzeichnet,**

    - **dass** bei der Ermittlung der frequenzselektiven Übertragungseigenschaften das Signalleistung-zu-Rauschleistung-Verhältnis S/N für jeden Subträger des sendesignals (su,sd) bestimmt wird, und
    - **daß** die Subträger des Sendesignals (su, sd) in Abhängigkeit des jeweils ermittelten Signalleistung-zu-Rauschleistung-Verhältnisses S/N für die Übermittlung von Informationen (dsu, dsd) genutzt werden.

13. Verfahren nach Anspruch 12,
    **dadurch gekennzeichnet,**
    **dass** bei einem unter einem Grenzwert gemessenen Signalleistung-zu-Rauschleistung-Verhältnis S/N der entsprechende Subträger nicht für die Übermittlung von Informationen (dsu, dsd) genutzt wird.

14. Verfahren nach Anspruch 12 oder 13,
    **dadurch gekennzeichnet,**
    **dass** alle nicht für die Übermittlung von Pilotsignalen genutzten Subträger des Sendesignals (su, sd) mit der gleichen Modulations-Stufenzahl moduliert werden, wobei die Modulations-Stufenzahl durch das ermittelte Signalleistung-zu-Rauschleistung-Verhältnis bestimmt ist.

15. Verfahren nach einem der vorherigen Ansprüche,
    **dadurch gekennzeichnet,**
    **dass** die zwischen der ersten und zweiten Einheit (RNT, BS) übermittelten Sendesignale (su, sd) mit Hilfe eines Zeitmultiplex-Duplex-Übertragungsverfahrens TDD übermittelt werden.

16. Verfahren nach einem der vorherigen Ansprüche,
    **dadurch gekennzeichnet,**
    **dass** das Multiträgerverfahren durch ein OFDM-Übertragungsverfahren - Orthogonal Frequency Division Multiplexing - oder durch ein auf diskrete Multitöne - DMT - basierendes Übertragungsverfahren realisiert wird.

17. Verfahren nach einem der vorherigen Ansprüche,
    **dadurch gekennzeichnet,**
    **dass** das Übertragungsmedium (FK) als drahtloser Funkkanal oder leitungs- oder drahtgebundener Übertragungskanal ausgestaltet ist.

18. Verfahren nach Anspruch 17,
    **dadurch gekennzeichnet,**
    **dass** die Sendesignale über Energieversorgungsleitungen übertragen werden.

19. Kommunikationsanordnung zum Übermitteln von Informationen über ein zwischen einer ersten und einer zweiten Einheit angeordnetes und bestimmte Übertragungseigenschaften aufweisendes Übertragungsmedium mit Einrichtungen zum Ausführen der Verfahrensschritte gemäß einem der Ansprüche 1 bis 18,

    - bei der die erste und die zweite Einheit (RNT, BS) jeweils eine Sendeeinrichtung (SON,SOB) aufweisen, mit deren Hilfe zu übermittelnde Informationen (dsu,dsd) in ein mehrere frequenzspezifische Subträger aufweisendes Sendesignal (su,sd) mit Hilfe eines Multiträgerverfahrens umgewandelt werden,

- bei der die erste und die zweite Einheit (RNT, BS) ein der jeweiligen Sendeeinrichtung (SON, SOB) jeweils nachgeschaltete Sendemittel (HS,SA) aufweisen, mit deren Hilfe das Sendesignal (su,sd) über das Übertragungsmedium (FK) an die jeweilige Einheit (BS,RNT) übermittelt wird,
- bei der die erste und die zweite Einheit (RNT, BS) jeweils eine Empfangseinrichtung (EON, EOB) aufweisen, mit deren Hilfe ein über das Übertragungsmedium (FK) übermitteltes Sendesignal (sd,su) der jeweiligen Einheit (BS, RNT) empfangen wird,

**dadurch gekennzeichnet,**

- **dass** bei der ersten Einheit (RNT) die Empfangseinrichtung (EON) eine Auswerteeinrichtung (KS) beinhaltet, mit deren Hilfe aus mindestens einem Pilotsignal, das über mindestens einen frequenzspezifischen Subträger des Sendesignals übermittelt wird und das von der zweiten Einheit (BS) über das Übertragungsmedium an die erste Einheit (RNT) gelangt, frequenzselektive Übertragungseigenschaften des Übertragungsmediums (FK) ermittelt werden, und
- **dass** bei der ersten Einheit (RNT) die Sendeeinrichtung (SON) Anpassungsmittel (EZ) beinhaltet, mit deren Hilfe die frequenzspezifischen Subträger des Sendesignals (su) an die ermittelten frequenzselektiven Übertragungseigenschaften des Übertragungsmediums (FK) angepasst werden.

20. Kommunikationsanordnung nach Anspruch 19, **dadurch gekennzeichnet,**

- **dass** bei der zweiten Einheit (BS) die Empfangseinrichtung (EOB) eine Auswerteeinrichtung beinhaltet, mit deren Hilfe aus mindestens einem Pilotsignal, das über mindestens einen frequenzspezifischen Subträger des Sendesignals übermittelt wird und das von der ersten Einheit (RNT) über das Übertragungsmedium an die zweite Einheit (BS) gelangt, frequenzselektive Übertragungseigenschaften des Übertragungsmediums (FK) ermittelt werden, und
- **dass** bei der zweiten Einheit (ES) die Sendeeinrichtung (SOB) Anpassungsmittel beinhaltet, mit deren Hilfe die frequenzspezifischen Subträger des Sendesignals (sd) an die ermittelten frequenzselektiven Übertragungseigenschaften des Übertragungsmediums (FK) angepasst werden.

21. Kommunikationsanordnung nach Anspruch 19 oder 20,

**dadurch gekennzeichnet,**
**dass** die Auswerteeinrichtung derart ausgestaltet ist, dass als Übertragungseigenschaften die frequenzselektiven amplitudenspezifischen und/oder frequenzselektiven phasenspezifischen Eigenschaften des Übertragungsmediums (FK) ermittelbar sind.

## Claims

1. Method for transmitting information via a transmission medium having particular transmission characteristics, with the aid of a multicarrier method, in which the information to be transmitted is transmitted by a first unit to a second unit via the transmission medium by means of a transmit signal having two or more frequency-specific subcarriers, in which

- the second unit (BS) transmits to the first unit (RNT) at least one frequency-specific subcarrier of a further transmit signal, which is used for transmitting at least one pilot signal,
- the first unit (RNT) uses the pilot signal to determine the frequency-selective transmission characteristics of the transmission medium (FK), and
- the first unit (RNT) matches the frequency-specific subcarriers of the transmit signal (su), which is to be transmitted to the second unit (BS), to the determined frequency-selective transmission characteristics of the transmission medium (FK).

2. Method according to Claim 1, **characterized**

- **in that** the first unit (RNT) transmits to the second unit (BS) at least one frequency-specific subcarrier of the transmit signal, which is used for transmitting at least one pilot signal,
- **in that** the second unit (BS) uses the pilot signal to determine the frequency-selective transmission characteristics of the transmission medium (FK), and
- **in that** the second unit (BS) matches the frequency-specific subcarriers of the transmit signal (sd) which is to be transmitted to the first unit (RNT), to the frequency-selective transmission characteristics of the transmission medium (FK).

3. Method according to Claim 1 or 2, **characterized**
**in that** the frequency-selective amplitude-specific and/or frequency-selective phase-specific characteristics of the transmission medium (FK) are determined as transmission characteristics.

4. Method according to one of Claims 1 to 3, **characterized** **in that** the transmission characteristics are determined by determining a transfer function H(f) for the transmission medium (FK).

5. Method according to Claim 4, **characterized** **in that** the magnitude |H(f)| of the determined transmission function H(f) represents the amplitude-specific transmission characteristics of the transmission medium (FK)

6. Method according to one of the previous claims, **characterized** **in that** the at least one subcarrier of the at least one pilot signal is modulated by a phase modulation method with the pilot signal having a specific reference amplitude.

7. Method according to one of Claims 3 to 6, **characterized** **in that** the amplitude-specific and/or phase-specific transmission characteristics of adjacent pilot signals are averaged for determining the frequency-selective transmission characteristics of the transmission medium (FK).

8. Method according to one of Claims 3 to 7, **characterized**

   - **in that**, in order to determine the frequency-selective transmission characteristics of the transmission medium (FK), the amplitude-specific and/or phase-specific transmission characteristics are determined for each unit over a period of time and are stored in the respective unit,
   - **in that**, the mean value of the stored transmission characteristics is in each case formed, and
   - **in that** the subcarriers of the transmit signal (su, sd) to be transmitted are matched in the respective unit to the transmission characteristics which are averaged over time.

9. Method according to one of the previous claims, **characterized**

   - **in that** the first unit (RNT) transmits the determined frequency-selective transmission characteristics to the second unit (BS), and
   - **in that** the second unit (BS) matches the frequency-specific subcarriers of the transmit signal (sd) to be transmitted by them to the transmitted transmission characteristics of the transmission medium (FK) in the second unit (BS).

10. Method according to Claims 8 and 9, **characterized** **in that** the first unit (RNT) transmits only the rates of change of the transmission characteristics to the second unit (BS).

11. Method according to one of Claims 4 to 10, **characterized** **in that** during the matching of the transmit signal (su, sd) to the transmission characteristics of the transmission medium (FK), the subcarriers of the transmit signal (su, sd) are multiplied by the inverse of the transfer function 1/H(f) or by the inverse of the magnitude of the transfer function 1/|H(f)|.

12. Method according to one of the previous claims, **characterized**

   - **in that**, during the determination of the frequency-selective transmission characteristics, the signal power/noise power ratio S/N is determined for each subcarrier of the transmit signal (su, sd), and
   - **in that** the subcarriers of the transmit signal (su, sd) are used for the transmission of information (dsu, dsd) as a function of the signal power/noise power ratio S/N determined in each case.

13. Method according to Claim 12, **characterized** **in that** if the measured signal power/noise power ratio S/N is below a limit value, the corresponding subcarrier is not used for transmitting information (dsu, dsd).

14. Method according to Claim 12 or 13, **characterized** **in that** all subcarriers of the transmit signal (su, sd) which are not used for transmitting pilot signals are modulated with the same number of modulation levels, the number of modulation levels being determined by the determined signal power/noise power ratio.

15. Method according to one of the previous claims, **characterized** **in that** the transmit signals (su, sd) which are transmitted between the first and the second unit (RNT, BS) are transmitted with the aid of a time-division multiplexing duplex transmission method (TDD).

16. Method according to one of the preceding claims, **characterized** **in that** the multicarrier method is implemented by an OFDM (orthogonal frequency division multiplex) transmission method or by a transmission method based on discrete multitones (DMT).

**17.** Method according to one of the preceding claims, **characterized**
**in that** the transmission medium (FK) is in the form of a wireless radio channel or a cable or wire connected transmission channel.

**18.** Method according to Claim 17, **characterized**
**in that** the transmit signals are transmitted via power supply lines.

**19.** Communication arrangement for transmitting information via a transmission medium which is arranged between a first and a second unit, has specific transmission characteristics and has a device for carrying out the method steps according to one of Claims 1 to 18,

- in which the first and the second unit (RNT, BS) each have a transmission device (SON, SOB) with whose aid information (dsu, dsd) to be transmitted is converted with the aid of a multicarrier method to a transmit signal (su, sd) which has two or more frequency-specific subcarriers,
- in which the first and the second unit (RNT, BS) have a respective transmission means (HS, SA) which is connected downstream of the respective transmission device (SON, SOB) and with whose aid the transmit signal (su, sd) is transmitted via the transmission medium (FK) to the respective unit (BS, RNT),
- in which the first and the second unit (RNT, BS) each have a receiving device (EON, EOB), with whose aid a transmit signal (sd, su) which is transmitted via the transmission medium (FK) is received by the respective unit (BS, RNT),

**characterized**

- **in that**, in the first unit (RNT) the receiving device (EON) contains an evaluation device (KS) with whose aid frequency-selective transmission characteristics of the transmission medium (FK) are determined from at least one pilot signal which is transmitted via at least one frequency-specific subcarrier of the transmit signal, and which is passed from the second unit (BS) via the transmission medium to the first unit (RNT), and
- **in that**, in the first unit (RNT) the transmission device (SON) contains matching means (EZ), with whose aid the frequency-specific subcarriers of the transmit signal (su) are matched to the determined frequency-selective transmission characteristics of the transmission medium (FK).

**20.** Communication arrangement according to Claim 19, **characterized**

- **in that**, in the second unit (BS), the receiving device (EOB) contains an evaluation device with whose aid, frequency-selective transmission characteristics of the transmission medium (FK) are determined from at least one pilot signal which is transmitted via at least one frequency-specific subcarrier of the transmit signal and which is passed from the first unit (RNT) via the transmission medium to the second unit (BS), and
- **in that** in the second unit (BS), the transmission device (SOB) contains matching means, with whose aid the frequency-specific subcarriers of the transmit signal (sd) are matched to the determined frequency-selective transmission characteristics of the transmission medium (FK).

**21.** Communication arrangement according to Claim 19 or 20, **characterized**
**in that** the evaluation device is designed such that the frequency-selective amplitude-specific and/or frequency-selective phase-specific characteristics of the transmission medium (FK) can be determined as the transmission characteristics.

**Revendications**

**1.** Procédé pour transmettre des informations au moyen d'un support de transmission présentant certaines propriétés de transmission à l'aide d'un procédé à ondes porteuses multiples, dans lequel une première unité transmet les informations à transmettre à une seconde unité au moyen d'un signal d'émission comportant plusieurs sous-porteuses spécifiques en fréquence par l'intermédiaire du support de transmission,
**dans lequel**

- la seconde unité (BS) émet à la première unité (RNT) au moins une sous-porteuse spécifique en fréquence d'un signal d'émission supplémentaire, qui est utilisé pour la transmission d'au moins un signal pilote,
- dans la première unité (RNT) les propriétés de transmission sélectives en fréquence du support de transmission (FK) sont déterminées à l'aide du signal pilote, et
- dans la première unité (RNT) les sous-porteuses spécifiques en fréquence du signal d'émission (su) à transmettre à la seconde unité (BS) sont adaptées aux propriétés de transmission sélectives en fréquence déterminées du support de transmission (FK).

2. Procédé selon la revendication 1, **caractérisé en ce que**

   - la première unité (RNT) émet au moins une sous-porteuse spécifique en fréquence du signal d'émission, qui est utilisée pour transmettre au moins un signal pilote, à la seconde unité (BS),
   - dans la deuxième unité (BS) les propriétés de transmission sélectives en fréquence du support de transmission (FK) sont déterminées à l'aide du signal pilote,
   - dans la seconde unité (BS) les sous-porteuses spécifiques en fréquence du signal d'émission (sd) à transmettre à la première unité (RNT) sont adaptées aux propriétés de transmission sélectives en fréquence du support de transmission (FK).

3. Procédé selon la revendication 1 ou 2, **caractérisé en ce que** les propriétés spécifiques en amplitude et/ou en phases sélectives en fréquence du support de transmission (FK) sont déterminées comme propriétés de transmission.

4. Procédé selon l'une des revendications 1 à 3, **caractérisé en ce que** une fonction de transmission H (f) du support de transmission (FK) est déterminée lors de la détermination des propriétés de transmission.

5. Procédé selon la revendication 4, **caractérisé en ce que** le montant | H (f)| de la fonction de transmission déterminée H(f) représente les propriétés de transmission spécifiques en amplitude du support de transmission (FK).

6. Procédé selon l'une des revendications précédentes, **caractérisé en ce que** l'au moins une sous-porteuse de l'au moins un signal pilote est modulée par un procédé de modulation en phase, le signal pilote comportant une certaine amplitude de référence.

7. Procédé selon l'une des revendications 3 à 6, **caractérisé en ce que** l'on fait la moyenne des propriétés de transmission spécifiques en amplitude et/ou en phase de signaux pilote adjacents pour déterminer les propriétés de transmission sélectives en fréquence du support de transmission (FK).

8. Procédé selon l'une des revendications 3 à 7,

**caractérisé en ce que**

   - pour la détermination des propriétés de transmission sélectives en fréquence du support de transmission (FK) les propriétés de transmission spécifiques en amplitude et/ou en phase sont déterminées pour chaque unité pendant une période et mémorisées pour l'unité correspondante,
   - la moyenne respective est établie sur les propriétés de transmission mémorisées,
   - les sous-porteuses du signal d'émission à transmettre (su, sd) sont adaptées à chaque unité aux propriétés de transmission dont la moyenne a été faite dans le temps.

9. Procédé selon l'une des revendications précédentes, **caractérisé en ce que** les propriétés de transmission sélectives en fréquence déterminées de la première unité (RNT) sont transmises à la deuxième unité (BS) et

   - **en ce que** dans la seconde unité (BS) les sous-porteuses spécifiques en fréquence du signal d'émission (sd) à transmettre par celles-ci sont adaptées aux propriétés de transmission transmises du support de transmission (FK).

10. Procédé selon la revendication 8 et 9, **caractérisé en ce que** seules les modifications dans le temps des propriétés de transmission de la première unité (RNT) sont transmises à la deuxième unité (BS).

11. Procédé selon l'une des revendications 4 à 10, **caractérisé en ce que** dans le cadre de l'adaptation du signal d'émission (su, sd) aux propriétés de transmission du support de transmission (FK) les sous-porteuses du signal d'émission (su, sd) sont multipliées avec la fonction de transmission inversée 1/H(f) ou avec le montant inversé de la fonction de transmission 1/|H(f)|.

12. Procédé selon l'une des revendications précédentes, **caractérisé en ce que**

   - lors de la détermination des propriétés de transmission sélectives en fréquence le rapport signal-bruit (S/N) est déterminé pour chaque sous-porteuse du signal d'émission (su, sd) et
   - **en ce que** les sous-porteuses du signal d'émission (su, sd) sont utilisées en fonction du rapport signal-bruit S/N déterminé respectivement pour la transmission d'informations (dsu, dsd).

13. Procédé selon la revendication 12,

**caractérisé en ce que**

pour un rapport signal-bruit S/N mesuré sous une valeur limite, la sous-porteuse correspondante n'est pas utilisée pour la transmission d'informations (dsu, dsd).

14. Procédé selon la revendication 12 ou 13,
**caractérisé en ce que**

toutes les sous-porteuses du signal d'émission (su, sd) non utilisées pour la transmission de signaux pilote sont modulées avec le même nombre de paliers de modulation, le nombre de paliers de modulation étant déterminé par le rapport signal-bruit établi.

15. Procédé selon l'une des revendications précédentes,
**caractérisé en ce que**

les signaux d'émission (su, sd) transmis entre la première et la seconde unité (RNT, BS) sont transmis à l'aide d'un procédé de transmission duplex par multiplexage dans le temps TDD.

16. Procédé selon l'une des revendications précédentes,
**caractérisé en ce que**

le procédé à ondes porteuses multiples est réalisé par un procédé de transmission OFDM - orthogonal frequency division multiplexing = multiplexage par répartition en fréquence orthogonal - ou par un procédé de transmission basé sur des tonalités multiples discrètes DMT.

17. Procédé selon l'une des revendications précédentes,
**caractérisé en ce que**

le support de transmission (FK) est réalisé comme voie radioélectrique sans fil ou comme voie de transmission par fil ou par câble.

18. Procédé selon la revendication 17,
**caractérisé en ce que**

les signaux d'émission sont transmis par des lignes d'alimentation en énergie.

19. Système de communication pour transmettre des informations au moyen d'un support de transmission disposé entre une première et une seconde unité et comportant certaines propriétés de transmission avec des dispositifs pour l'exécution des étapes du procédé selon l'une des revendications 1 à 18,

- dans lequel la première et la seconde unité (RNT, BS) comportent respectivement un dispositif émetteur (SON, SOB), à l'aide duquel des informations à transmettre (dsu, dsd) sont converties en un signal d'émission (su, sd) comportant plusieurs sous-porteuses spécifiques en fréquence à l'aide d'un procédé à ondes porteuses multiples,

- dans lequel la première et la seconde unité (RNT, BS) comportent un moyen d'émission (HS, SA) disposé en aval respectivement du dispositif d'émission respectif (SON, SOB), à l'aide duquel le signal d'émission (su, sd) est transmis à l'unité respective (BS, RNT) au moyen du support de transmission (FK),

- dans lequel la première et la deuxième unité (RNT, BS) comportent respectivement un dispositif récepteur (EON, EOB) à l'aide duquel un signal d'émission (sd, su) de l'unité respective (BS, RNT) est reçu au moyen du support de transmission (FK),

**caractérisé en ce que**

- avec la première unité (RNT) le dispositif récepteur (EON) contient un dispositif d'évaluation (KS) à l'aide duquel à partir d'au moins un signal pilote, qui est transmis par au moins une sous-porteuse spécifique en fréquence du signal d'émission et qui parvient à la première unité (RNT) depuis la deuxième unité (BS) au moyen du support de transmission, des propriétés de transmission sélectives en fréquence du support de transmission (FK) sont déterminées, et

- **en ce que** avec la première unité (RNT) le dispositif émetteur (SON) contient des moyens d'adaptation (EZ) à l'aide desquels les sous-porteuses spécifiques en fréquence de signal d'émission (su) sont adaptées aux propriétés de transmission sélectives en fréquence déterminées du support de transmission (FK).

20. Système de communication selon la revendication 19,
**caractérisé en ce que**

- dans la deuxième unité (BS) le dispositif récepteur (EOB) contient un dispositif d'évaluation, à l'aide duquel à partir d'au moins un signal pilote, qui est transmis par au moins une sous-porteuse spécifique en fréquence du signal d'émission et qui parvient de la première unité (RNT) à la deuxième unité (BS) au moyen du support de transmission, des propriétés de transmission sélectives en fréquence du support de transmission (FK) sont déterminées et

- **en ce que** dans la seconde unité (BS) le dispositif émetteur (SOB) contient des moyens d'adaptation, à l'aide desquels les sous-porteuses spécifiques en fréquence du signal d'émission (sd) sont adaptés aux propriétés de transmission sélectives en fréquence déterminées du support de transmission (FK).

21. Système de communication selon la revendication 19 ou 20,
   **caractérisé en ce que**
   le dispositif d'évaluation est réalisé de telle sorte que les propriétés du support de transmission (FK) sélectives en fréquence spécifiques en amplitude et/ou sélectives en fréquence et spécifiques en phase peuvent être déterminées comme propriétés de transmission.

**FIG 1**

BS

FK

EP 1 142 172 B1

FIG 2

RNT

FK

sd

su

EA

SA

SEE2

EH

HE

HA

HS

sd

AH

su

HE

EO

AO

FFT

AF1..n

IFFT

EF1..n

es1..n

n

EK1..n

ASK

ss'1..n

n

AZ1..n

KS

HF

SN

Is ( H(f), S/N )

EZ

1/HF

SA

VL

SE

ESS

 EON

EM1..n

es1..n

n

DMOD

AK1..n

ss1..n

n

EE1..n

SON

AM1..n

MOD

AO

EO

AS

ES

ded

dsu